# EUROPEAN PATENT APPLICATION

(11) **EP 4 755 504 A1**
(43) Date of publication of application: **10.06.2026**
(21) Application number: 24217282.3
(22) Date of filing: 03.12.2024
(51) Int. Cl.: B01J 8/00, B01J 8/06

(54) **LOADING A REACTOR WITH A TUBULAR LOADING DEVICE HAVING A STRUCTURED INNER SURFACE**

(71) Applicant: CLARIANT INTERNATIONAL LTD, 4132 Muttenz (CH)
(72) Inventor: Ilic, Milan, 81925 München (DE); Schulz, Felix, 81925 München (DE); Aigner, Maximilian, 81925 München (DE); Diekmann, Ebbe Juul, 2840 Holte (DK)
(74) Representative: Zusammenschluss Clariant

(57) **Abstract**

The present invention relates to a method for filling a reactor with a tubular loading device having a structured inner surface.

## Description

The object of the present invention is a method for filling a reactor with a tubular loading device having a structured inner surface.

Filling reactors with bulk material, such as catalyst material, adsorbents, or inert materials, often requires cautious handling, as the materials to be filled can break on impact with the bottom of the reactor or with materials being already present on such bottom, depending on material's mechanical stability. The resulting fines, but also the formation of fragments of the material, can lead to pressure losses inside the reactor and have a detrimental effect on reactor performance.

In order to reduce the impact velocity, the free fall height of the catalyst must be kept low. This is usually difficult in reactors that are designed as tubular reactors. To overcome this problem a variety of technologies have been developed and used in the past to reduce the drop speed of the catalyst in reactor tubes. For this purpose, special devices are inserted into the tubes that contain occasionally placed obstacles (anti-fall devices) with which the catalyst particles interact as they fall, preventing the catalyst particles from reaching impact velocities sufficient to cause significant breakage. Most often these devices are used in pipes of larger dimensions (-75 mm internal diameter and larger) and are often impractical for use in smaller diameter pipes.

DE 10 2006 044 274 A1 discloses a device for filling vertical tubes with granular material comprising a rope to which transverse baffles are attached. The position of the device in the tube is such that the rope axis is between an outer circle and a concentric inner circle and the baffles extend to the outer circle, the diameter of the inner circle being at least half that of the outer circle.

EP 2 892 810 A1 relates to a device for filling a vertical elongate container with granules, the container comprising elements for slowing the fall of the granules, which elements are intended to be distributed vertically inside the container by means of elements that support these fall-slowing elements, these supporting elements being fixed along a first support that extends vertically and that is called the first vertical support, in which device the supporting elements are also fixed along a second support that extends vertically and that is called the second vertical support.

In US 2003031536 A1 a method of loading particulate catalytic material into a reactor tube and a loading apparatus for use in the method are disclosed. The method comprises providing a loading tube through which catalyst particles pass in a damped motion. The dampening means are provided by mounting a spirally formed body on the inner wall of each tube section. The spirally formed body is formed from a rod having an arbitrarily shaped cross-section and a maximum dimension in any direction of the cross-section of 1/25-112 of the diameter of the tube section. The spirally formed body in each section has a pitch, with respect to the diameter of the tube section, in the interval of 2-8.

US 10821410 A1 relates to a device for gently and uniformly filling a tube, in particular a tubular reactor, with particulate filling material, in particular catalyst particles; wherein the device comprises specially designed fall arrester elements and also comprises means which reduce the wear of the fall arrester elements; and method for filling a tube using these articles.

US 2013298507 A1 describes a device for filling a container with solid particles, the device having annular ducts for passing particles, which ducts are defined by a plurality of vertical nozzles arranged coaxially relative to one another, and a diaphragm arranged upstream from the annular ducts for regulating the flow rate of particles in the annular ducts, the diaphragm has a plurality of shutter flaps for shutting off the annular ducts, each flap shutting off an angular sector of a single annular duct and the diaphragm having control means for controlling movement of the shutter flaps that are configured to be capable of partially shutting off any one of duct independently of the other ducts.

The object of the present invention is to provide a method for filling a reactor using a loading device which is improved with respect to the above-mentioned disadvantages.

This task is solved by a method in which the filling is carried out via a tubular loading device having a structured inner surface.

The object of the present invention is therefore a process for filling a reactor with bulk material using a tubular loading device, the process comprising the following steps:
(A) Providing a reactor with at least one vertically arranged reactor tube
(B) Providing a tubular loading device having a structured inner surface,
(C) Insert the tubular loading device into the at least one vertically arranged reactor tube and fix it at the upper opening of the reactor tube,
(D) Filling the reactor by conveying the bulk material via the at least one vertically arranged tubular loading device into the lower reactor section, and
(E) Removing the tubular loading device from the reactor tube.

The structured inner surface of the tubular loading device is characterized by visible or perceptible unevenness. This allows a controlled filling of the reactor with bulk material, since by interaction of the bulk material with the structured inner surface the falling speed of the bulk material is slowed down, leading to less damage of the individual bulk material bodies, when falling through the reactor and hitting the reactor bottom.

In one embodiment of the inventive process, the structured inner surface is characterized by a sequence of concentric ridges and ditches, which are arranged horizontally in relation to the longitudinal direction of the tubular loading device.

In one embodiment of the inventive process, the structured inner surface is characterized by a sequence of concentric angled ridges and ditches in relation to the longitudinal direction of the tubular loading device.

In one embodiment of the inventive process, the structured inner surface is characterized by a sequence of concentric angled ridges and ditches in relation to the longitudinal direction of the tubular loading device and interpenetrate.

In one embodiment of the inventive process, the structured inner surface is characterized by a sequence of concentric ridges and ditches, which run in a spiral along the length of the tubular loading device.

In one embodiment of the inventive process, the structured inner surface is characterized by a sequence of concentric ridges and ditches, which run in a spiral along the length of the tubular loading device and interpenetrate.

In one embodiment of the inventive process, the structured inner surface is characterized by a sequence of bumps.

In one embodiment of the inventive process, the structured inner surface is characterized by a sequence of pits.

In another embodiment the structured inner surface of the tubular loading device is characterized by a sequence of at least two of the following elements: concentric ridges and ditches, which are arranged horizontally in relation to the longitudinal direction of the tubular loading device, concentric ridges and ditches, which run in a spiral along the length of the tubular loading device, concentric ridges and ditches, which run in a spiral along the length of the tubular loading device and interpenetrate, concentric angled ridges and ditches, which are arranged horizontally in relation to the longitudinal direction of the tubular loading device and interpenetrate, bumps and pits.

Fixing of the tubular loading device in step (C) can be done by different applicable means.

In one embodiment of the invention the tubular loading device is fixed to an anchoring element which has a central opening through which the bulk material can enter the tubular loading device. Such anchoring element can be a flange.

The anchoring element is selected so that its diameter is at least slightly larger than the internal diameter of the reactor tube to be filled. This ensures that the tubular loading device connected to the anchoring element is fixed inside the reactor tube to avoid that it falls into the reactor tube and can be easily removed once the reactor tube has been filled. The anchoring element has a central opening through which the material to be filled enters the tubular loading device and can flow unhindered into the reactor tube via the tubular loading device.

If several tubular loading devices fixed to an anchoring element are to be inserted into adjacent reactor tubes, the dimensions of the anchoring element can be selected so that adjacent anchoring elements eventually contact each other but do not overlap. Depending on the arrangement of the reactor tubes, different geometries of the anchoring element dimensions are provided for this purpose, such as a hexagonal shape, a triangular shape or a square shape. By avoiding such overlapping of the anchoring element individual tubular loading device can be removed from the respective reactor tube if necessary without the need to remove the tubular loading device from adjacent reactor tubes as well.

In one embodiment, the diameter of the central opening is smaller than the inner diameter of the tubular loading device; in another embodiment, the diameter is larger than the inner diameter of the tubular loading device; in a further embodiment, the diameter is as large as the inner diameter of the tubular loading device.

The tubular loading device is flexible or rigid.

For example, the tubular loading device can be made of thermoplastic, flexible polymers such as polyurethane or comprise these polymers.

In one embodiment the tubular loading device is selected from a hose and a tube.

The material of the tubular loading device is selected in such a way that no rubbed-off party of the tubular loading device are deposited on the bulk material, leading to inferior properties of the bulk material. In addition, the material is selected so that it can withstand the mechanical stress resulting from contact with the bulk material.

Furthermore, the tubular loading device can have a length of at least 1 m, preferably at least 2 m, more preferably in the range of 2 m to 10 m, most preferably in the range of 3 to 7 m. The optimum length depends on the geometry of the reactor tube and is usually 1/3 - 1/2 of the total height of the reactor tube when it is still unloaded. If bulk material is filled into a reactor tube that is already filled with a certain amount of additional bulk material, a tubular loading device with a correspondingly shorter length is selected.

Many reactors, for example conventional reactors for methanol synthesis, have a height of between 7 and 10 meters. Tubular loading device having a structured inner surface with the above-mentioned length make it particularly easy to slow down bulk material introduced into the tubular loading device during transport through the tubular loading device and to fill these reactors over a large part of their height without damaging the bulk material. The inserted bulk material slides through the tubular loading device having a structured inner surface and is thus slowed down so that damage to the bulk material is avoided if the bulk material falls to the reactor bottom.

The outer diameter of the tubular loading device used in the method according to the invention is smaller than the inner diameter of the reactor tubes to be filled. The inner diameter of the reactor tubes to be filled are usually in the range from 30 to 80 mm, preferably 40 to 70 mm, more preferably in the range from 45 to 55 mm.

The inner diameter of the tubular loading device used in the method according to the invention is selected so that individual particles of the bulk material to be filled can move through the tubular loading device without blocking the tubular loading device in the form of plugging. In one embodiment the ratio between the inner diameter and the largest dimension of the individual particle is in the range from 4.6 to 6.0.

Catalyst material, preferably in the form of pellets, for example catalyst tablets, can be used as bulk material

The reactor provided in step (A) contains at least one vertically arranged reactor tube. In a preferred embodiment, the reactor contains 2 to 25000 reactor tubes, more preferably 1000 to 20000 reactor tubes, in particular 2500 to 15000 reactor tubes.

In step (B), the tubular loading device having a structured inner surface, is provided and inserted into the at least one vertically arranged reactor tube and fixed to the upper opening of the reactor tube in step (C). The tubular loading device is completely inserted into the interior of the reactor tube. If the reactor has several vertically arranged reactor tubes, further tubular loading devices can be inserted into these reactor tubes as provided in step (B). In this way, either all the reactor tubes present in the reactor or only a limited number of reactor tubes in the reactor can be fitted with tubular loading device.

The reactor is then filled with bulk material in step (D). In one embodiment the bulk material is fed through an opening at the upper end of the reactor into the space above the reactor tubes to be filled, in another embodiment the reactor dome is removed, to allow insertion of the bulk material into the reactor. If only a certain number of reactor tubes are to be filled, one has to ensure that no bulk material gets into the reactor tubes that shall not be filled. This is ensured, for example, by closing the upper openings of the reactor tubes that shall not be filled, or by arranging a vertical barrier between the area above the reactor tubes to be filled and the area above the reactor tubes that shall not be filled, and only placing the bulk material in the separated area above the reactor tubes to be filled.

The bulk material falls into the reactor tubes, which are equipped with the tubular loading devices having a structured inner surface. Mechanical means can be used to support the filling of the reactor tubes. Suitable means are brushes, brooms, rakes or ropes. Filling with bulk material is continued until all reactor tubes to be filled are completely filled with bulk material. Any excess bulk material that resides still above the reactor tubes is removed from the reactor.

The tubular loading device is then removed from the reactor tube in step (E). The particles of the bulk material that were located in the inner part of the tubular loading device settle further within the reactor tube, forming the final catalyst bed. Since the tubular loading device inserted in step (C) has a smaller volume than the surrounding reactor tube, a void is created above the catalyst bed when the tubular loading device is removed and the particles have settled.

The void can be filled with further bulk material by repeatedly applying the method according to the invention, whereby the tubular loading device to be used has a length which is less than or equal to the length of the void inside the reactor tube. In a further embodiment, the bulk material can also be filled without using a tubular loading device, in particular if the length of the void is so small that the individual particles remain intact when they impact the existing catalyst bed.

After process step (E), the reactor can then be put into operation. In one embodiment of the process according to the invention, the process is directed towards loading a reactor for methanol synthesis.

The process according to the invention is therefore particularly suitable for introducing catalyst material, for example in the form of pellets, into the reactor interior as bulk material. Since the catalyst material typically remains in the reactor for a long time during operation of the reactor, the reactor can subsequently be operated over a long period of time, for example for several years, without the bulk material having to be replaced.

In the following, the invention will be explained in more detail with reference to examples of embodiments and figures. It shows:

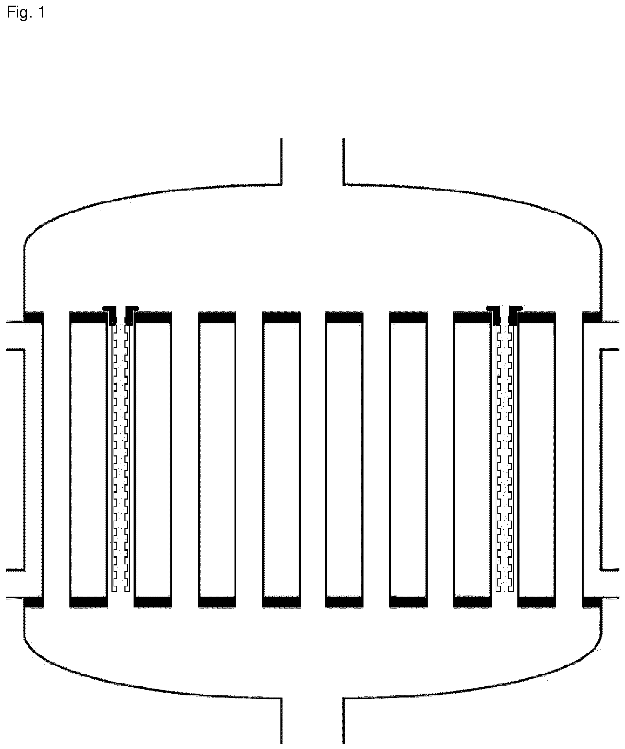

Figure 1 shows a reactor with several reactor tubes, whereby tubular loading devices having structured inner surfaces are inserted in two of them.

### Example

The improved loading method according to the invention was demonstrated with an experimental set-up, whereby a vertically arranged tube of 8 length was provided and at the lower end blocked with a sieve for accurate filling of the tube with catalyst particles.

In a first test run 3 kg of catalyst bulk material were filled into the tube to obtain a catalyst bed. Afterwards the pressure drop of this catalyst bed was measured.

In a second test run a hose of 6 m length with concentric ridges and ditches, which are arranged horizontally in relation to the longitudinal direction of the hose, was inserted into the tube from the upper opening and fixed at the upper opening to prevent the hose from falling to the bottom end of the tube. Afterwards 3 kg of catalyst bulk material were filled into the tube via the hose, and the hose was thereafter removed from the tube. The pressure drop of the so obtained catalyst bed was measured under the same conditions as for the first test run.

In a third test run the same steps were done as in the second test run, with the exception that a hose without any structured inner surface was used.

**Table 1: Experimental results of the reactor tube loading test.**

| parameter | 1^{st} test run | 2^{nd} test run (according to invention) | 3^{rd} test run (comparison) |
|---|---|---|---|
| Pressure drop at 4.0 m³/hr [mbar] | 122 | 88 | 110 |
| Pressure drop reduction [%] | 0 | -28 | -10 |

Table 1 demonstrates that the pressure drop of the catalyst bed of the 2^{nd} test run according to the invention leads to drastically improved reduction of overall pressure drop, not only as compared to tube loading without any loading device as shown by the 1^{st} test run, but also as compared with loading of the tube by using a hose without an structured inner surface as shown by the 3^{rd} test run.

The invention is not limited by the description based on the embodiments. Rather, the invention includes any new feature as well as any combination of features, which includes in particular any combination of features in the patent claims, even if this feature or combination itself is not explicitly stated in the patent claims or embodiments.

## Claims

1. Process for filling a reactor with bulk material using a tubular loading device, the process comprising the following steps:
(A) Providing a reactor with at least one vertically arranged reactor tube,
(B) Providing a tubular loading device having a structured inner surface,
(C) Insert the tubular loading device into the at least one vertically arranged reactor tube,
(D) Filling the reactor by conveying the bulk material via the at least one vertically arranged tubular loading device into the lower reactor section, and
(E) Removing the tubular loading device from the reactor tube.

2. Process according to claim 1, wherein catalyst material, preferably in the form of pellets, is used as bulk material.

3. Process according to claim 1 or 2, wherein the structured inner surface is **characterized by** a sequence of concentric ridges and ditches, which are arranged horizontally in relation to the longitudinal direction of the tubular loading device.

4. Process according to claim 1 or 2, wherein the structured inner surface is **characterized by** a sequence of concentric angled ridges and ditches in relation to the longitudinal direction of the tubular loading device.

5. Process according to claim 1 or 2, wherein the structured inner surface is **characterized by** a sequence of concentric angled ridges and ditches in relation to the longitudinal direction of the tubular loading device and interpenetrate.

6. Process according to claim 1 or 2, wherein the structured inner surface is **characterized by** a sequence of concentric ridges and ditches, which run in a spiral along the length of the tubular loading device.

7. Process according to claim 1 or 2, wherein the structured inner surface is **characterized by** a sequence of concentric ridges and ditches, which run in a spiral along the length of the tubular loading device and interpenetrate.

8. Process according to claim 1 or 2, wherein the structured inner surface is **characterized by** a sequence of bumps.

9. Process according to claim 1 or 2, wherein the structured inner surface is **characterized by** a sequence of pits.

10. Process according to claim 1 or 2, wherein the structured inner surface of the tubular loading device is **characterized by** a sequence of at least two of the following elements: concentric ridges and ditches, which are arranged horizontally in relation to the longitudinal direction of the tubular loading device, concentric ridges and ditches, which run in a spiral along the length of the tubular loading device, concentric ridges and ditches, which run in a spiral along the length of the tubular loading device and interpenetrate, concentric angled ridges and ditches, which are arranged horizontally in relation to the longitudinal direction of the tubular loading device and interpenetrate, bumps and pits.

11. Process according to any of claims 1 to 10, wherein the tubular loading device is fixed to an anchoring element which has an opening through which the bulk material can enter the tubular loading device, preferably a flange.

12. Process according to any of claims 1 to 11, wherein the tubular loading device is flexible or rigid.

13. Process according to any of claims 1 to 12, wherein the tubular loading device is selected from a hose and a tube.

14. Process according to any of claims 1 to 13, wherein the tubular loading device has a length of at least 1 m, preferably at least 2 m, more preferably in the range of 2 m to 10 m, most preferably in the range of 3 to 7 m.

15. Process according to any of claims 1 to 14, wherein the reactor contains 2 to 25000 reactor tubes, more preferably 1000 to 20000 reactor tubes, in particular 2500 to 15000 reactor tubes.
